# EUROPÄISCHE PATENTSCHRIFT

(11) **EP 1 586 465 B1**
(45) Veröffentlichungstag und Bekanntmachung des Hinweises auf die Patenterteilung: **01.12.2010**
(21) Anmeldenummer: 05008296.5
(22) Anmeldetag: 15.04.2005
(51) Int. Cl.: B44B 5/02

(54) **Prägeform zum Prägen von Reliefstrukturen und Verfahren zu deren Herstellung**
Embossing form for embossing relief structures and method of manufacturing the same
Forme d'impression pour former des structures en relief et son procédé de fabrication

(30) Priorität: 16.04.2004 DE 102004019187
(43) Veröffentlichungstag der Anmeldung: 19.10.2005
(73) Patentinhaber: Giesecke & Devrient GmbH, 81677 München (DE)
(72) Erfinder: Loth, Nikola, 83730 Fischbachau-Hammer (DE); Krempl, Helmut, 83734 Hausham (DE); Heim, Manfred, Dr., 83646 Bad Tölz (DE)
(74) Vertreter: Klunker . Schmitt-Nilson . Hirsch

(56) Entgegenhaltungen:
- EP-A- 1 369 262
- WO-A-98/01278
- WO-A-2004/016450
- WO-A1-92/19461
- DE-A1- 2 121 010
- DE-A1- 2 644 801

## Beschreibung

Die Erfindung betrifft eine Prägeform und ein Prägewerkzeug zum Prägen von Reliefstrukturen, deren Verwendung zum Prägen von beugungsoptischen Strukturen sowie ein Verfahren zur Herstellung der Prägeform.

Hologramme, Kinegramme® oder ähnliche auf Beugungseffekten beruhende Elemente stellen aufgrund ihres mit Änderung des Betrachtungswinkels auftretenden Farbwechselspiels sowie der Möglichkeit, vom Betrachtungswinkel abhängige lesbare Informationen zu erzeugen, ein beliebtes Echtheitsmerkmal dar, da dieser so genannte "optisch variable Effekt" praktisch nicht durch einfache Mittel imitiert werden kann. Sie bieten ferner einen sehr guten Schutz gegen Fälschungen mittels Farbkopierern. Denn das Kopiergerät kann nur die unter einem bestimmten Betrachtungswinkel erkennbare Information und Farbe des Hologramms wiedergeben, der optisch variable Effekt dagegen geht verloren.

Üblicherweise werden die in der Sicherungstechnik verwendeten Hologramme als Prägehologramme hergestellt, das heißt, die in den Beugungsstrukturen gespeicherte holografische Information wird in eine Reliefstruktur umgesetzt. Die Reliefstruktur liegt letztendlich auf plattenförmigen Nickelfolien vor, die als Prägeform dienen. Einzelne oder mehrere dieser Prägformen werden auf einen Spannzylinder aufgeklebt oder aufgespannt, um ein kontinuierliches Prägen einer Hologramm-Prägefolie oder eines vernetzbaren Lacks zu ermöglichen. Aus der Prägeform können auch andere Prägewerkzeuge hergestellt werden, wie z.B. Prägestempel oder Endlosprägebänder.

In den Druckschriften WO 98/01278 A1 und EP 1369 262 A2 werden Varianten zur Herstellung von Prägezylindern beschrieben. Die EP 0 420 261 A2 beschreibt detailliert das gesamte Verfahren beginnend mit der filmtechnischen Hologrammherstellung bis hin zur Applikation eines daraus abgeleiteten Prägehologramms im Transferverfahren auf das Endprodukt, z.B. auf eine Chipkarte oder Banknote.

Die Herstellung der Prägeform, die auch als "Shim" bezeichnet wird, ist sehr aufwändig. Zunächst wird von einem Modell ein laserrekonstruierbares Hologramm auf einem Silberschichtfilm hergestellt, welches als "Primärhologramm" bezeichnet wird. Das im Primärhologramm als Grauwertstruktur vorliegende Hologramm wird anschließend in ein Oberflächenrelief umgewandelt, indem es beispielsweise in Fotoresistschichten kopiert wird, und wird dann als "Sekundärhologramm" oder auch als "Resistmaster" bezeichnet. Häufig werden als Substrat für die Fotoresistschichten Glasplatten verwendet, so dass das Sekundärhologramm bisweilen auch als "Glasmaster" bezeichnet wird. Der Glasmaster selbst kann mangels Stabilität zum Prägen nicht verwendet werden. Daher wird der Glasmaster zunächst versilbert, um ihn elektrisch leitfähig zu machen, damit in einem nächsten Schritt auf elektrogalvanischem Weg eine Nickelschicht auf dem Glasmaster aufgebaut und anschließend von diesem abgezogen werden kann. Dieser Nickelabzug wird als "Prägemaster" bezeichnet und kann theoretisch zum Prägen verwendet werden.

Allerdings stellt der Prägemaster ein teures Unikat dar und wird wegen der Verletzungs- und Abnutzungsgefahr im Allgemeinen nicht zum Prägen von Hologrammen verwendet. Außerdem bildet der Prägemaster lediglich eine einzelne Motivzelle ab. Daher werden vom Prägemaster wiederum auf elektrogalvanischem Wege so genannte "Submaster" abgeformt und von mehreren Submastern eine erste Prägeform, die so genannte "Prägematrize" nochmals auf elektrogalvanischem Wege hergestellt, um eine Platte mit mehreren Motivzellen zu erhalten. Wenn der Prägemaster die Reliefstruktur als Positiv-Relief trägt, dann trägt die Prägematrize dieselbe Reliefstruktur ebenfalls als Positivrelief.

Da die Lebensdauer einer solchen Matrize aber selten mehr als zehntausend Prägungen beträgt, werden die Prägmatrizen ihrerseits vervielfacht, indem damit zunächst eine große Anzahl von Nutzen in eine thermoplastische Kunststoffplatte, z.B. Plexiglas, geprägt wird. Diese Kunststoffplatte wird auch als "Plastikmaster" bezeichnet. Sie wird anschließend wiederum versilbert - wie schon zuvor der Glasmaster - und bildet den so genannten "Silbermaster". Von dem Silbermaster wird wie schon zuvor von dem Silberabzug auf galvanischem Wege ein Nickelabzug, der so genannte "erste Nickelmaster", und von diesem wiederum ein weiterer Nickelabzug, der so genannte "zweite Nickelmaster", hergestellt. Der zweite Nickelmaster führt somit zu einer Nickelplatte, von der dann wiederum auf galvanischem Wege die endgültige Prägeform, das "Shim", abgeformt wird. Auf dieser Prägeform liegt die Reliefstruktur wieder als Positiv-Relief vor. Aus der Prägeform wird dann das Prägewerkzeug hergestellt, indem beispielsweise durch Laserschneiden und Schweißen ein Prägezylinder erzeugt wird.

Nachteilhaft an den bekannten Prägeformen - sei es die Prägematrize oder das endgültige Shim - ist der hohe Verschleiß der Reliefstrukturen durch die hohe mechanische Belastung beim Prägen. Das heißt, die Prägewerkzeuge sind nur begrenzt einsetzbar und müssen regelmäßig ersetzt werden, was hohe Produktionskosten verursacht. Insbesondere beim Prägen in aushärtende Lacke, wie einem UV-härtbaren Lack, verschmutzen die Reliefstrukturen mit der Zeit und das geprägte Hologramm verliert dadurch an Brillanz. Das Dokument DE-A-2121010 offenbart eine metallische Prägeform mit einer fakultativen Chromschicht zum Prägen von Reliefstrukturen in Schichtpreßstoffe, z.B. Melaminharzplatten. Aufgabe der vorliegenden Erfindung ist es daher, die Haltbarkeit der Prägewerkzeuge und der Prägeformen zu verbessern.

Diese Aufgabe wird durch eine Prägeform und ein Verfahren zur Herstellung derselben mit den Merkmalen der nebengeordneten Ansprüche gelöst. In davon abhängigen Ansprüchen sind vorteilhafte Weiterbildungen.und Ausgestaltungen der Erfindung angegeben.

Dementsprechend wird die Prägeform zumindest im Bereich der Reliefstruktur mittels einer zusätzlichen Schicht veredelt. Als Veredelungsschicht wird vorzugsweise ein Material gewählt, welches weniger stark an dem Material, in das bei der Hologrammherstellung mit der Prägeform geprägt wird, haftet, als die unveredelte Oberfläche der Prägeform bzw. des Nickelmasters. Mittels der zusätzlichen Veredelungsschicht bleibt die Prägeform daher längere Zeit unverschmutzt, so dass brillantere Hologramme erzeugbar sind.

Ein besonders stabiler Verbund der Veredelungsschicht mit der Prägeform lässt sich jedoch gemäß einer bevorzugten Herstellungsvariante erzielen, wenn die Veredelungsschicht nicht unmittelbar auf die Prägeform, sondern zunächst auf den zweiten Nickelmaster aufgedampft wird. Indem anschließend die Prägeform galvanisch auf der Veredelungsschicht aufgebracht wird, entsteht eine innige Verbindung der Veredelungsschicht mit der Prägeform, die stärker ist als die Verbindung der Veredelungsschicht mit dem zweiten Nickelmaster. Die Prägeform wird dann zusammen mit der Veredelungsschicht von dem zweiten Nickelmaster abgezogen, so dass man eine Prägeform mit durch die Veredelungsschicht veredelter Oberfläche erhält.

Als besonders geeignete Materialien für die Veredelungsschicht haben sich metallische Materialien, wie Gold, Kupfer, Silber oder Chrom, und insbesondere Hartstoffbeschichtungen erwiesen. Vorzugsweise handelt es sich bei den Hartstoffbeschichtungen um CrN, TiN, AlCrN, AlTiN, TiCN, TiAlCN, DLC (Diamond Like Carbon), MoSe₂.

Die Prägestrukturen sollen durch die Veredelungsschicht möglichst wenig eingeebnet werden. Deshalb sind für die Veredelungsschicht Schichtdicken im Bereich von 100 nm bis 1000 nm sinnvoll. Besonders bevorzugt werden Schichtdicken im Bereiche von 200 nm.

Die Veredelungsschicht kann mit jedem geeigneten Verfahren aufgebracht werden, z.B. thermisch Aufdampfen, Sputtern, Elektronenstrahlaufdampfen und Lichtbogenbedampfung. Die metallische Beschichtung, z.B. mit Gold, wird vorzugsweise thermisch aufgedampft. Für die Beschichtung mit Chrom ist Sputtern bevorzugt. Im Prinzip kann auch mit Elektronenstrahlaufdampfverfahren gearbeitet werden. Die Hartstoffbeschichtungen werden vorzugsweise mittels Lichtbogenbedampfung (arc evaporation) aufgebracht.

Durch die Veredelungsschicht lässt sich die Laufleistung herkömmlicher Nickelmatrizen um mehr als 50% steigern. Aufgrund der verbesserten Haltbarkeit sinken die Produktionskosten entsprechend. Auch die Hologrammqualität der mit den veredelten Prägeformen geprägten Kunststofffolien und Lacke ist aufgrund der stabileren Reliefoberfläche wesentlich erhöht. Denn je geringer die Abnutzung der Reliefoberfläche ist, desto brillanter wird das damit geprägte Reliefmuster.

Selbstverständlich muss der zweite Nickelmaster nicht notwendigerweise aus Nickel bestehen. Auch muss der Master nicht notwendigerweise galvanisch hergestellt werden. Die galvanische Herstellung des Masters aus Nickel ist jedoch wegen der weiten Verbreitung dieser Technologie zu bevorzugen. Insbesondere ist die Erfindung auch nicht beschränkt auf die Veredelung der Oberfläche des Shims, sondern kann in entsprechender Weise auch zur Oberflächenveredelung jedes zur Prägung geeigneten Werkzeugs, also z.B. des Prägemasters, der Submaster und der von den Submastern abgeformten Prägematrize eingesetzt werden, mit der dann die Plastikmaster geprägt werden.

Gemäß einer Weiterbildung der Erfindung wird eine weitere Erhöhung der Haltbarkeit der Prägeformen durch Beschichten der Veredelungsschicht mit einem Nanolack erzielt, der beispielsweise aufgesprüht wird. Das Aufsprühen ist technisch wenig aufwändig, und es hat sich gezeigt, dass damit eine ausreichend gleichmäßige Oberflächenbeschichtung mit Schichtdicken im Nanometerbereich erzielbar ist.

Gemäß einer weiteren bevorzugten Ausführungsform wird die unveredelte Oberfläche, die mit der Veredelungsschicht versehen wird, vor der Veredelung gereinigt. Zur Reinigung wird die Oberfläche insbesondere ausgeheizt und gegebenenfalls anschließend plasmavorbehandelt. Als Plasmavorbehandlung können Wasserstoffplasmen, Argonplasmen oder Sauerstoffplasmen oder Mixturen daraus eingesetzt werden. Das Ausheizen erfolgt z.B. über mehrere Stunden bei ca. 150 bis 500°C im Vakuum. Der Reinigungsprozess führt zu einer besseren Haftung der Veredelungsschichten zum Untergrund.

Zur besseren Haftung zwischen Veredelungsschicht und zu veredelnder Oberfläche kann auf diese als Haftvermittler eine dünne Metallschicht, insbesondere von ca. 1 bis 50 nm, aufgedampft werden.

Aus der so hergestellten Prägeform lassen sich dann Prägewerkzeuge herstellen, wie z.B. Prägezylinder oder Endlosprägebänder oder auch einfache Prägestempel. Insbesondere können unmittelbar von den Submastern Prägeformen für Prägestempel mit nur einer oder wenigen Motivzellen hergestellt werden. Nachfolgend wird die Erfindung anhand der begleitenden Zeichnungen beispielhaft erläutert. Darin zeigen:
- Fig. 1: einen Nickelmaster mit Oberflächenrelief,
- Fig. 2: den Nickelmaster aus Figur 1 mit Veredelungsschicht auf dem Oberflächenrelief und
- Fig. 3: einen Nickel-Shim mit Oberflächenrelief und Veredelungsschicht beim Abziehen von dem Nickelmaster.

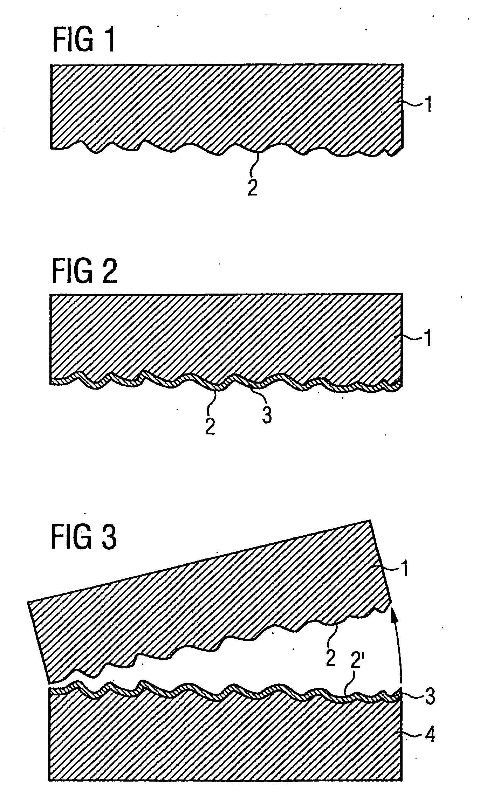

Fig. 1 zeigt einen Nickelmaster 1, der beispielsweise der eingangs erwähnte Submaster oder der zweite Nickelmaster sein kann, die das Reliefmuster jeweils als Negativ-Relief 2 enthalten und von denen die zum Prägen verwendeten Prägeformen, also die Prägematrizen und Shims, galvanisch abgeformt werden. Als Master 1 kann aber auch der eingangs erwähnte Prägemaster oder der erste Nickelmaster dienen, auf denen das Reliefmuster als Positiv-Relief vorliegt, wenn unmittelbar von diesen die Prägeformen abgeformt werden sollen. Dann liegt die Reliefstruktur auf den Prägeformen als Negativ-Relief vor.

Der Master 1 muss nicht notwendigerweise ein galvanisch erzeugter Nickelmaster sein, sondern kann auch aus einem anderen Material galvanisch hergestellt werden. Es ist auch nicht ausgeschlossen, dass der Master 1 mit dem Relief 2 auf nicht-galvanische Weise hergestellt wird, beispielsweise indem in die Oberfläche eines Vollmaterials das abzuformende Relief,2 eingraviert wird.

Das Relief 2 des Masters 1 wird zunächst mit einer Veredelungsschicht 3 beschichtet (Fig. 2). Dabei handelt es sich vorzugsweise um ein Metall oder ein anderes Material, welches im Zusammenwirken mit den später zu prägenden Substraten - wie z.B. Kunststofffolien oder härtbaren Lacken - optimale Eigenschaften hinsichtlich Verschleißbeständigkeit und Verschmutzungsresistenz besitzen. Zum späteren Prägen in UV-vernetzbare Lacke hat sich als Material für die Veredelungsschicht 3 Chromnitrid als besonders geeignet erwiesen. Auch die Verwendung von Gold hat sehr gute Ergebnisse erbracht. So konnte die Einsatzdauer eines Prägewerkzeugs mit einer Veredelungsschicht aus Gold um etwa 50% verlängert werden.

Die Veredelungsschicht 3 wird zumindest bereichsweise auf das Relief 2 aufgebracht und erstreckt sich vorzugsweise nicht nur über das Relief 2, sondern auch über daran angrenzende, reliefstrukturfreie Oberflächenbereiche des Masters 1. Die Beschichtung ist aber von besonderer Bedeutung im Bereich des Reliefs 2, da die Verschmutzungsgefahr und der Verschleiß der Prägewerkzeuge gerade in diesem Bereich auftreten.

Im nächsten Schritt (Fig. 3) wird eine Metallschicht 4 in üblicher Weise, z.B. aus Nickel, auf der Veredelungsschicht 3 galvanisch aufgebaut. Aufgrund des galvanischen Verfahrens ist es erforderlich, dass die Veredelungsschicht 3 elektrisch leitend ist, also entweder elektrisch leitend gemacht ist oder aus einem von Natur aus elektrisch leitenden Material, insbesondere also aus einem Metall wie dem vorerwähnten Chromnitrid oder Gold, besteht.

Aufgrund der galvanischen Erzeugung der Metallschicht 4 ist der Verbund zwischen der Metallschicht 4 und der Veredelungsschicht 3 wesentlich stabiler als der Verbund zwischen der Veredelungsschicht 3 und dem Master 1. Daher kann die Metallschicht 4 zusammen mit der Veredelungsschicht 3 von dem Master 1 in einem nachfolgenden Verfahrensschritt abgezogen werden und bildet dann die Grundlage für die Prägeform mit einer durch die Veredelungsschicht 3 veredelten Oberfläche und einer zur Reliefstruktur 2 des Masters 1 komplementären Reliefstruktur 2'.

Die Veredelungsschicht 3 kann zumindest im Bereich der Reliefstruktur 2' zusätzlich mit einem Nanolack besprüht werden, um die Prägeeigenschaften der Reliefoberfläche 2' weiter zu verbessern.

## Patentansprüche

1. Prägeform zum Prägen von Reliefstrukturen, umfassend eine galvanisch hergestellte Metallschicht (4) mit einer Reliefstruktur (2'), die zum Prägen von beugungsoptischen Strukturen geeignet ist, in einer Oberfläche der Metallschicht, **gekennzeichnet durch** eine mit der Metallschicht verbundene Veredelungsschicht (3) zumindest in einem Bereich der Reliefstruktur (2').

2. Prägeform nach Anspruch 1, **dadurch gekennzeichnet, dass** die Verbindung zwischen der Veredelungsschicht (3) und der Metallschicht (4) darauf basiert, dass die Metallschicht galvanisch auf der Veredelungsschicht aufgebaut worden ist.

3. Prägeform nach Anspruch 1 oder 2, **dadurch gekennzeichnet, dass** die Veredelungsschicht (3) aus Gold besteht.

4. Prägeform nach Anspruch 1 oder 2, **dadurch gekennzeichnet, dass** die Veredelungsschicht (3) aus Chromnitrid besteht.

5. Prägeform nach einem der Ansprüche 1 bis 4, **dadurch gekennzeichnet, dass** die Veredelungsschicht (3) eine aufgedampfte Schicht ist.

6. Prägeform nach einem der Ansprüche 1 bis 5, **dadurch gekennzeichnet, dass** die Metallschicht (4) aus Nickel besteht.

7. Prägeform nach einem der Ansprüche 1 bis 6, **dadurch gekennzeichnet, dass** die Veredelungsschicht (3) mit einem Nanolack beschichtet ist.

8. Prägewerkzeug umfassend eine Prägeform nach einem der Ansprüche 1 bis 7.

9. Prägewerkzeug nach Anspruch 8, **dadurch gekennzeichnet, dass** es sich um einen Prägezylinder, ein Endlosprägeband oder einen Prägestempel handelt.

10. Verfahren zur Herstellung einer Prägeform zum Prägen von Reliefstrukturen, umfassend ein zur Verfügung Stellen einer galvanisch hergestellten Metallschicht mit einer Reliefstruktur die zum Prägen von beugungsoptischen Strukturen geeignet ist, in einer Oberfläche der Metallschicht, **dadurch gekennzeichnet, daß** die Oberfläche mit einer Veredelungsschicht beschichtet wird.

11. Verfahren zur Herstellung einer Prägeform zum Prägen von Reliefstrukturen, umfassend ein zur Verfügung Stellen eines Masters (1), der in einer Oberfläche eine erste Reliefstruktur (2) aufweist, **gekennzeichnet durch** folgende Schritte :
- Beschichten der Oberfläche des Masters (1) zumindest in einem Bereich der ersten Reliefstruktur (2) mit einer Veredelungsschicht (3),
- galvanisches Aufbauen einer Metallschicht (4) auf der Veredelungschicht (3) derart, dass sich die Metallschicht (4) mit der Veredelungsschicht (3) verbindet, und
- Trennen der Metallschicht (4) einschließlich der Veredelungsschicht (3) von dem Master (1) zur Erzeugung einer Prägeform, die in einer durch die Veredelungsschicht (3) veredelten Oberfläche der Metallschicht (4) eine zweite, zur ersten Reliefstruktur (2) komplementäre Reliefstruktur (2), die zum Prägen von beugungsoptischen Strukturen geeignet ist, aufweist.

12. Verfahren nach Anspruch 10 oder 11, **dadurch gekennzeichnet, dass** als Material für die Veredelungsschicht (3) Gold gewählt wird.

13. Verfahren nach Anspruch 10 oder 11, **dadurch gekennzeichnet, dass** als Material für die Veredelungsschicht (3) Chromnitrid gewählt wird.

14. Verfahren nach einem der Ansprüche 10 bis 13, **dadurch gekennzeichnet, dass** das Beschichten der Reliefstruktur bzw. der ersten Reliefstruktur (2) mit der Veredelungsschicht (3) in einem Aufdampfverfahren erfolgt.

15. Verfahren nach einem der Ansprüche 10 bis 14, **dadurch gekennzeichnet, dass** als Material für die galvanisch hergestellte bzw. aufgebaute Metallschicht (4) Nickel gewählt wird.

16. Verfahren nach einem der Ansprüche 10 bis 15, **dadurch gekennzeichnet, dass** als Master (1) ein galvanisch hergestellter Master zur Verfügung gestellt wird.

17. Verfahren nach Anspruch 16, **dadurch gekennzeichnet, dass** als Master (1) ein Master aus Nickel gewählt wird.

18. Verfahren nach einem der Ansprüche 11 bis 17, **gekennzeichnet durch** den weiteren Schritt des Beschichtens der Veredelungsschicht (3) auf der Metallschicht (4) in einem Bereich der komplementären Reliefstruktur (2') mit einem Nanolack.

19. Verfahren nach Anspruch 18, **dadurch gekennzeichnet, dass** der Schritt des Beschichtens der Veredelungsschicht (3) das Aufsprühen des Nanolacks umfasst.

20. Verwendung einer Prägeform nach einem der Ansprüche 1 bis 7 oder eines Prägewerkzeugs nach einem der Ansprüche 8 oder 9 zum Prägen von beugungsoptischen Prägestrukturen.

21. Verwendung einer Prägeform nach einem der Ansprüche 1 bis 7 oder des Prägewerkzeugs nach einem der Ansprüche 8 oder 9 zum Prägen von Reliefstrukturen in einen härtbaren Lack.

## Claims

1. An embossing die for embossing relief structures, comprising a galvanically produced metal layer (4) having a relief structure (2') which is suitable for embossing diffractive optical structures, in a surface of the metal layer, **characterized by** an improvement layer (3), connected to the metal layer, at least in an area of the relief structure (2').

2. The embossing die according to claim 1, **characterized in that** the connection between the improvement layer (3) and the metal layer (4) is based on the metal layer having been built up on the improvement layer galvanically.

3. The embossing die according to claim 1 or 2, **characterized in that** the improvement layer (3) consists of gold.

4. The embossing die according to claim 1 or 2, **characterized in that** the improvement layer (3) consists of chromium nitride.

5. The embossing die according to any of claims 1 to 4, **characterized in that** the improvement layer (3) is a vapor-deposited layer.

6. The embossing die according to any of claims 1 to 5, **characterized in that** the metal layer (4) consists of nickel.

7. The embossing die according to any of claims 1 to 6, **characterized in that** the improvement layer (3) is coated with a nano-lacquer.

8. An embossing tool comprising an embossing die according to any of claims 1 to 7.

9. The embossing tool according to claim 8, **characterized in that** it is an embossing cylinder, an endless embossing belt or an embossing stamp.

10. A method for producing an embossing die for embossing relief structures, comprising a making available of a galvanically produced metal layer having a relief structure which is suitable for embossing diffractive optical structures, in a surface of the metal layer, **characterized in that** the surface is coated with an improvement layer.

11. A method for producing an embossing die for embossing relief structures, comprising a making available of a master (1) which has a first relief structure (2) in a surface, **characterized by** the following steps:
- coating the surface of the master (1) at least in an area of the first relief structure (2) with an improvement layer (3),
- galvanically building up a metal layer (4) on the improvement layer (3) such that the metal layer (4) connects to the improvement layer (3), and
- separating the metal layer (4) including the improvement layer (3) from the master (1) for producing an embossing die having, in a surface of the metal layer (4) improved by the improvement layer (3), a second relief structure (2') complementary to the first relief structure (2) and suitable for embossing diffractive optical structures.

12. The method according to claim 10 or 11, **characterized in that** the material chosen for the improvement layer (3) is gold.

13. The method according to claim 10 or 11, **characterized in that** the material chosen for the improvement layer (3) is chromium nitride.

14. The method according to any of claims 10 to 13, **characterized in that** the coating of the relief structure or of the first relief structure (2) with the improvement layer (3) is effected by a vapor deposition method.

15. The method according to any of claims 10 to 14, **characterized in that** the material chosen for the galvanically produced or built up metal layer (4) is nickel.

16. The method according to any of claims 10 to 15, **characterized in that** the master (1) made available is a galvanically produced master.

17. The method according to claim 16, **characterized in that** the master (1) chosen is a master made of nickel.

18. The method according to any of claims 11 to 17, **characterized by** the further step of coating the improvement layer (3) on the metal layer (4) in an area of the complementary relief structure (2') with a nano-lacquer.

19. The method according to claim 18, **characterized in that** the step of coating the improvement layer (3) comprises spraying on the nano-lacquer.

20. Use of an embossing die according to any of claims 1 to 7 or of an embossing tool according to either of claims 8 to 9 for embossing diffractive optical embossed structures.

21. Use of an embossing die according to any of claims 1 to 7 or of the embossing tool according to either of claims 8 to 9 for embossing relief structures into a curable lacquer.

## Revendications

1. Matrice de gaufrage destinée à gaufrer des structures en relief, comprenant une couche métallique confectionnée par galvanisation (4) comportant dans une surface de la couche métallique une structure en relief (2') appropriée au gaufrage de structures optiquement diffractantes, **caractérisée par**, au moins dans une zone de la structure en relief (2'), une couche d'ennoblissement (3) jointe à la couche métallique.

2. Matrice de gaufrage selon la revendication 1, **caractérisée en ce que** la jonction entre la couche d'ennoblissement (3) et la couche métallique (4) est basée sur le fait que la couche métallique a été constituée par galvanisation sur la couche d'ennoblissement.

3. Matrice de gaufrage selon la revendication 1 ou 2, **caractérisée en ce que** la couche d'ennoblissement (3) consiste en de l'or.

4. Matrice de gaufrage selon la revendication 1 ou 2, **caractérisée en ce que** la couche d'ennoblissement (3) consiste en du nitride de chrome.

5. Matrice de gaufrage selon une des revendications de 1 à 4, **caractérisée en ce que** la couche d'ennoblissement (3) est une couche déposée en phase vapeur.

6. Matrice de gaufrage selon une des revendications de 1 à 5, **caractérisée en ce que** la couche métallique (4) consiste en du nickel.

7. Matrice de gaufrage selon une des revendications de 1 à 6, **caractérisée en ce que** la couche d'ennoblissement (3) est revêtue d'un vernis nanotechnologique.

8. Outil de gaufrage comprenant une matrice de gaufrage selon une des revendications de 1 à 7.

9. Outil de gaufrage selon la revendication 8, **caractérisé en ce qu'**il s'agit d'un cylindre de gaufrage, d'une bande de gaufrage sans fin ou d'un poinçon de gaufrage.

10. Procédé de fabrication d'une matrice de gaufrage destinée à gaufrer des structures en relief, comprenant une mise à disposition d'une couche métallique confectionnée par galvanisation et comportant dans une surface de la couche métallique une structure en relief appropriée au gaufrage de structures optiquement diffractantes, **caractérisé en ce que** la surface est revêtue d'une couche d'ennoblissement.

11. Procédé de fabrication d'une matrice de gaufrage destinée à gaufrer des structures en relief, comprenant une mise à disposition d'une mère (1) qui comporte dans une surface une première structure en relief (2), **caractérisé par** les étapes suivantes :
- déposition d'une couche d'ennoblissement (3) revêtant la surface de la mère (1) au moins dans une zone de la première structure en relief (2),
- constitution d'une couche métallique (4) par galvanisation sur la couche d'ennoblissement (3) de telle manière que la couche métallique (4) se joint à la couche d'ennoblissement (3), et
- séparation de la couche métallique (4), la couche d'ennoblissement (3) inclue, de la mère (1), afin de générer une matrice de gaufrage qui comporte dans une surface de la couche métallique (4) ennoblie par.la couche d'ennoblissement (3) une deuxième structure en relief (2') qui est complémentaire à la première structure en relief (2) et qui est appropriée au gaufrage de structures optiquement diffractantes.

12. Procédé selon la revendication 10 ou 11, **caractérisé en ce que** c'est de l'or qui est choisi comme matériau pour la couche d'ennoblissement (3).

13. Procédé selon la revendication 10 ou 11, **caractérisé en ce que** c'est du nitride de chrome qui est choisi comme matériau pour la couche d'ennoblissement (3).

14. Procédé selon une des revendications de 10 à 13, **caractérisé en ce que** la déposition de la couche d'ennoblissement (3) revêtant la structure en relief ou la première structure en relief (2) a lieu lors d'un processus de dépôt en phase vapeur.

15. Procédé selon une des revendications de 10 à 14, **caractérisé en ce que** c'est du nickel qui est choisi comme matériau pour la couche métallique (4) confectionnée ou constituée par galvanisation.

16. Procédé selon une des revendications de 10 à 15, **caractérisé en ce que** c'est une mère confectionnée par galvanisation qui est mise à disposition comme mère (1).

17. Procédé selon la revendication 16, **caractérisé en ce que** c'est une mère en nickel qui est choisie comme mère (1).

18. Procédé selon une des revendications de 11 à 17, **caractérisé par** l'étape subséquente de la déposition d'une couche de vernis nanotechnologique sur la couche d'ennoblissement (3) se trouvant sur la couche métallique (4) dans une zone de la structure complémentaire en relief (2').

19. Procédé selon la revendication 18, **caractérisé en ce que** l'étape de la déposition d'un revêtement sur la couche d'ennoblissement (3) comprend la vaporisation du vernis nanotechnologique.

20. Utilisation d'une matrice de gaufrage selon une des revendications de 1 à 7 ou d'un outil de gaufrage selon une des revendications 8 ou 9 pour le gaufrage de structures gaufrées optiquement diffractantes.

21. Utilisation d'une matrice de gaufrage selon une des revendications de 1 à 7 ou de l'outil de gaufrage selon une des revendications 8 ou 9 pour le gaufrage de structures en relief dans un vernis durcissable.
